# EUROPEAN PATENT APPLICATION

(11) **EP 4 318 698 A1**
(43) Date of publication of application: **07.02.2024**
(21) Application number: 23186770.6
(22) Date of filing: 20.07.2023
(51) Int. Cl.: H01M 10/04, H01M 10/42, H01M 10/44, H01M 50/521

(54) **CONTACT MODULE OF DEVICE FOR CHARGING AND DISCHARGING THE BATTERY AND THE DEVICE INCLUDING THE SAME**

(30) Priority: 02.08.2022 KR 20220095805
(71) Applicant: WONIK PNE CO., LTD., Suwon-si, Gyeonggi-do 16648 (KR)
(72) Inventor: HAN, Woosik, 16648 Suwon-Si, Gyeonggi-do (KR); LEE, Jeongmok, 16648 Suwon-Si, Gyeonggi-do (KR)
(74) Representative: Zimmermann, Tankred Klaus

(57) **Abstract**

A contact module of a device for charging and discharging a battery is disclosed. The contact module includes: a first contact part copper plate and a second contact part copper plate disposed to be spaced apart from each other; a first air pocket and a second air pocket combined with inner side surfaces of the first contact part copper plate and the second contact part copper plate, respectively, and configured to expand or contract by a pneumatic pressure; and a support body disposed between the first air pocket and the second air pocket and configured to support the first air pocket and the second air pocket being spaced apart from each other.

## Description

### [Technical Field]

The present disclosure relates to a contact module of a device for charging and discharging a battery and a device for charging and discharging a battery including the same, and more particularly to a contact module of a device for charging and discharging a battery, which is able to come in contact with electrodes provided in a battery, and a device for charging and discharging a battery including the same.

### [Background Art]

In general, demand for secondary batteries is growing rapidly as power supplies for portable electronic devices for information communication, such as a cellular phone, a tablet PC, a laptop computer, and the like, an electric bicycle, and an electric car.

A process of manufacturing a secondary battery may be briefly classified into a pole plate process, an assembly process, an activation process, and a test process. The activation process means a process for activating an assembled battery (or battery cell) to be able to use the same. Specifically, during the activation process, a voltage and current are supplied to the battery to charge or discharge the battery. For example, after a contact module of a device for charging and discharging a battery, which is provided with a terminal, comes in contact with an electrode of the battery, the current or voltage is supplied to the electrode provided on the battery through the contact module.

Meanwhile, in case of a pouch-type battery, the battery may be charged or discharged in a state where the battery is pressed. In this case, since a pressurization plate provided in the battery charging and discharging device presses the contact module, the battery disposed between the contact modules is pressed, and further the electrode of the battery comes in contact with the contact module. In the related art, electrodes of pouch-type batteries and contact modules come in contact with each other in a manner that a plurality of contact modules are disposed side by side, the pouch-type batteries are also disposed between the plurality of contact modules, and pressurization plates simultaneously pressurize the plurality of contact modules.

However, in case of making the batteries and the contact modules come in contact with each other only by the pressurization plates as above, there is a problem in that it is difficult to pressurize several batteries with the same pressure, and thus contact reliability is degraded. Further, a charging/discharging test is possible only with respect to the pouch-type batteries having the same thickness for uniform transfer of the pressure, whereas with respect to the pouch-type batteries having different thicknesses, the pressure is transferred disproportionately to cause the damage of the electrodes of the batteries or the contact modules. As an alternative to this, springs are provided in the contact modules to heighten the contact performance between the contact modules and the electrodes of the batteries, but the elastic restoring force of the spring becomes lowered through the usage thereof over a predetermined period of time, and thus it is difficult to perform the function of the spring. A solution is needed for this.

Further, in the related art as described above, since the batteries should be disposed between the respective contact modules without exception, and a dummy cell should be disposed between the contact modules on which the battery is not disposed, there is a problem in that the charging/discharging work is cumbersome.

The matters described in the above background technology are to help understanding of the background of the present disclosure, and may include the matters that are not the disclosed technology in the related art.

### [Disclosure]

### [Technical Problem]

An object of the present disclosure is to provide a contact module of a device for charging and discharging a battery, and a device for charging and discharging a battery including the same, which can pressurize a plurality of pouch-type batteries with the same pressure during a test for charging and discharging the batteries, facilitate adjustment of contact part positions and make their individual operations possible during battery charging and discharging so as to be able to heighten the contact reliability of contact modules for the batteries even in case that the batteries have thickness deviations.

### [Technical Solution]

According to an embodiment of the present disclosure for achieving the above object, a contact module of a device for charging and discharging a battery includes: a first contact part copper plate and a second contact part copper plate disposed to be spaced apart from each other; a first air pocket and a second air pocket combined with inner side surfaces of the first contact part copper plate and the second contact part copper plate, respectively, and configured to expand or contract by a pneumatic pressure; and a support body disposed between the first air pocket and the second air pocket, and configured to support the first air pocket and the second air pocket being spaced apart from each other.

According to embodiments of the present disclosure for achieving the above object, a device for charging and discharging a battery includes: a pair of support frames disposed to face each other; an adjustment bar connected to the pair of support frames; and a plurality of contact members connected to the adjustment bar, and disposed side by side to be spaced apart from each other and to be movable, wherein each of the plurality of contact members includes a contact module including: a first contact part copper plate and a second contact part copper plate disposed to be spaced apart from each other; an air pocket combined with inner side surfaces of the first contact part copper plate and the second contact part copper plate, and configured to expand or contract by a pneumatic pressure; and a support body configured to support the first contact part copper plate and the second contact part copper plate being spaced apart from each other.

### [Advantageous Effects]

The present disclosure has a structure in which pressurization plates first pressurize contact part copper plates, and then two air pockets combined on the insides of the contact part copper plates expand simultaneously to make the contact part copper plates come in contact with electrodes of battery cells simultaneously. Accordingly, the present disclosure has effects of being able to pressurize a plurality of pouch-type battery cells with the same pressure during a test for charging and discharging the battery cells, and being able to heighten contact reliability of contact modules for the electrodes of the battery cells even in case that the battery cells have thickness deviations.

Further, the present disclosure can heighten the contact reliability between the contact part copper plates and the electrodes of the battery cells by adjusting the expansion degree of the two air pockets even in case that the thicknesses of the electrodes of the battery cells are changed. Further, since the air pockets perform buffering even in case that the battery cells are disposed between only some of the plurality of contact modules without being disposed between all of the plurality of contact modules, the present disclosure has effects of no risk of breakage of the contact part copper plates by the pressurizing force and no damage occurrence.

### [Description of Drawings]

FIG. 1 is a front view showing a shape in which both sides of a battery cell are positioned on a contact module of a device for charging and discharging a battery according to an embodiment of the present disclosure.
FIG. 2 is a side view of a device for charging and discharging a battery including contact modules according to an embodiment of the present disclosure.
FIG. 3 is a perspective view showing a contact module for a device for charging and discharging a battery according to an embodiment of the present disclosure, and FIG. 4 is an exploded perspective view showing a contact module for a device for charging and discharging a battery according to an embodiment of the present disclosure.
FIG. 5 is a cross-sectional view taken along line a-a of FIG. 3 and is a view showing a shape in which electrodes of a battery cell are positioned on contact modules of a device for charging and discharging a battery according to an embodiment of the present disclosure.
FIG. 6 is a view showing a shape in which a first air pocket and a second air pocket expand after a contact module for a device for charging and discharging a battery according to an embodiment of the present disclosure is pressed by a pressurization plate.
FIG. 7 is a view explaining the principle in which a first contact part copper plate and a second contact part copper plate move in a direction in which they get closer to each other when a contact module for a device for charging and discharging a battery according to an embodiment of the present disclosure is pressed by a pressurization plate.

### [Detailed Description]

Hereinafter, preferred embodiments of the present disclosure will be described in detail with reference to the accompanying drawings.

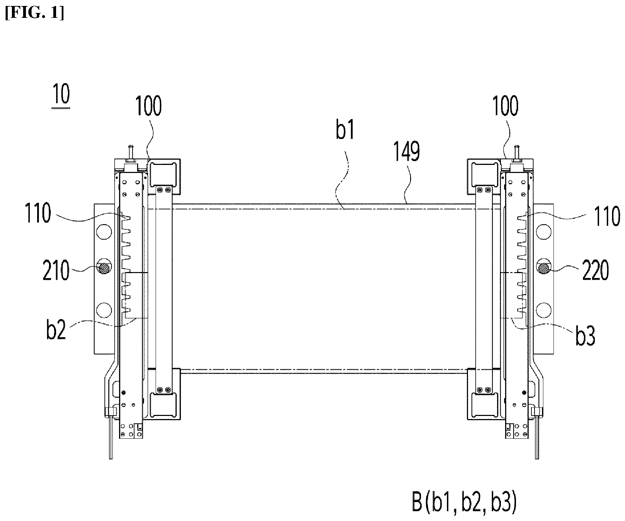

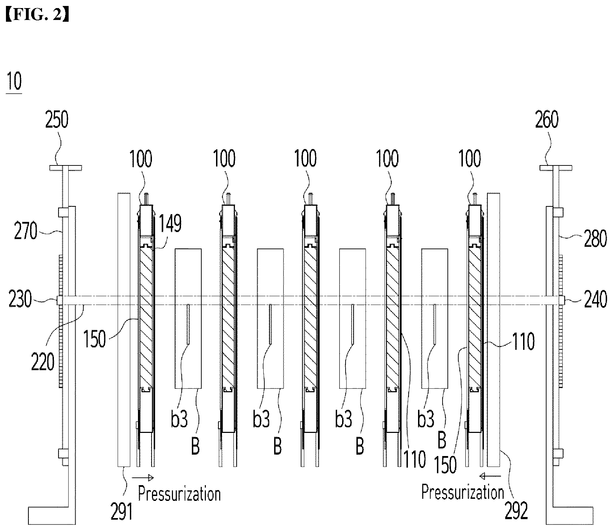

FIG. 1 is a front view showing a shape in which both sides of a battery cell are positioned on a contact module of a device for charging and discharging a battery according to an embodiment of the present disclosure. FIG. 2 illustrates a side surface of a device for charging and discharging a battery including contact modules according to an embodiment of the present disclosure.

As illustrated in FIGS. 1 and 2, a device 10 for charging and discharging a battery includes a contact module (hereinafter, "contact module") 100 of a device for charging and discharging a battery, which comes in contact with an electrode of a battery cell B and transfers a voltage and current thereto.

One surface of the contact module 100 according to embodiments of the present disclosure may come in contact with one surface of the electrode of one battery cell B, and the other surface of the contact module 100 may come in contact with one surface of the electrode of another battery cell. That is, two contact modules according to embodiments of the present disclosure may be positioned with the electrode of one battery cell B interposed therebetween. For example, the device 10 for charging and discharging a battery may include a plurality of contact modules 100 so as to be able to perform a test for charging and discharging a battery for a plurality of battery cells B at a time.

The battery cell B may be provided with electrodes b2 and b3 on both side surfaces of the battery cell B, and the device 10 for charging and discharging a battery may further include a support member 149 for connecting a pair of contact modules 100 corresponding to the electrodes b2 and b3 on both side surfaces of the battery cell B with each other. The support member 149 may be combined with the contact module 100 corresponding to one side terminal b2 of the battery cell B and the contact module 100 corresponding to the other side terminal b3 of the battery cell B, and may support the cell body b1 of the battery cell B.

The device 10 for charging and discharging a battery according to embodiments of the present disclosure may include a pair of contact modules 100 and a plurality of contact members including one support member 149 connected therewith, and the plurality of contact members may be disposed side by side at regular intervals.

The device 10 for charging and discharging a battery may include adjustment bars 210 and 220 for adjusting a disposition interval and horizontality of the contact module 100, gear shafts 230 and 240, adjustment handles 250 and 260, support frames 270 and 280, and pressurization members 291 and 292.

The adjustment bars 210 and 220 may be connected with the contact modules 100. According to embodiments, the adjustment bars 210 and 220 may be connected with the support member 149 by penetrating an opening formed on the support member 149 connected to the pair of contact modules 100. The opening of the support member 149 may be provided on an outside of the contact module 100, and thus the adjustment bars 210 and 220 may also be positioned out of the contact module 100.

The support member 149 may move before and after an extension direction of the adjustment bars 210 and 220 along the adjustment bars 210 and 220.

According to embodiments, one end and the other end of the adjustment bars 210 and 220 are engaged with the gear shafts 230 and 240, and an up/down/left/right position adjustment thereof is possible. The gear shafts 230 and 240 may include a rotating gear being engaged with end parts of the adjustment bars 210 and 220 and a rack gear being engaged with the rotating gear and making an up/down movement of the rotating gear possible. One end of the gear shafts 230 and 240 is connected with the adjustment handles 250 and 260, and an up/down/left/right micro position adjustment of the adjustment bars 210 and 220 may be possible in case that a worker rotates the adjustment handles 250 and 260 in one direction or in the other opposite direction.

The respective gear shafts 230 and 240 and gears may be installed in a manner that a first support frame 270 is installed on the side where the one end of the adjustment bars 210 and 220 is fixed, and a second support frame 280 is installed on the side where the other end of the adjustment bars 210 and 220 is fixed. By connecting the contact modules 100 positioned to correspond to one-side electrode and the other-side electrode of the battery cell B with the respective adjustment bars 210 and 220, it is possible to match the horizontality with respect to the plurality of battery cells B and to perform the test for charging and discharging the battery cells B on uniform position conditions. That is, the contact reliability and test reliability can be heightened by providing the uniform conditions when performing the test for charging and discharging the plurality of battery cells B.

The battery cell B may be of a cylindrical, prismatic, polymer, or pouch type, and in an embodiment, a pouch-type battery cell is exemplified. The charging/discharging test may be to variously evaluate output current and voltage specifications and cycle lifetime of the battery cell B that is used in an electric car. The battery cell B may be used as a portable power charge (PPC) in the electric car. The pouch-type battery cell B includes a cell body b1 and electrodes b2 and b3 on both sides of the cell body b1, and a silicone pad may be disposed on an outer surface of the cell body b1 to protect the cell.

Each of the battery cells B may be disposed between the contact modules 100. According to embodiments, one battery cell B may be disposed between two contact modules 100 along the extension direction of the adjustment bars 210 and 220. For example, the contact modules 100 and the battery cells B may be extendedly disposed along the extension direction of the adjustment bars 210 and 220, such as in the order of the battery cell B, the contact module 100, the battery cell B, and the contact module 100.

The pressurization plates 291 and 292 may be disposed on an outer surface of the contact member disposed on an outermost side, and may be configured to pressurize the contact modules 100 and the support member 149 in a direction in which they get closer to each other.

According to embodiments, the pressurization plates 291 and 292 may include the first pressurization plate 291 and the second pressurization plate 292, and the first pressurization plate 291 may be disposed in front of the contact member positioned at the forefront in the extension direction of the adjustment bars 210 and 220, and the second pressurization plate 292 may be disposed in the rear of the contact member positioned at the rearmost in the extension direction of the adjustment bars 210 and 220. That is, all of the plurality of contact members may be disposed between the pressurization plates 291 and 292.

The pressurization plates 291 and 292 pressurize the contact members in a direction in which they get closer to each other. According to embodiments, the pressurization plates 291 and 292 may be connected with a separately provided motor through a driving shaft, and may pressurize the contact members in the direction in which they get closer to each other in accordance with the operation of the motor.

As the contact members are pressurized in the direction in which they get closer to each other, the battery cell B positioned between the contact members are also pressurized by the contact members. Specifically, the cell body b1 of the battery cell B may be pressurized by the adjacently disposed pressurization members, and the distance between the electrodes b2 and b3 of the battery cell B and the adjacent contact module 100 also becomes closer.

According to embodiments, a heat dissipation plate may be additionally provided on the surface of the support member 149 of the contact member. After the cell body b1 of the battery cell is pressurized by the support member 149, the heat dissipation plate may transfer heat energy to the pressurized cell body b1 of the battery cell B. The temperature of the heat dissipation plate may be increased, and thus the temperature of the battery cell may also be increased.

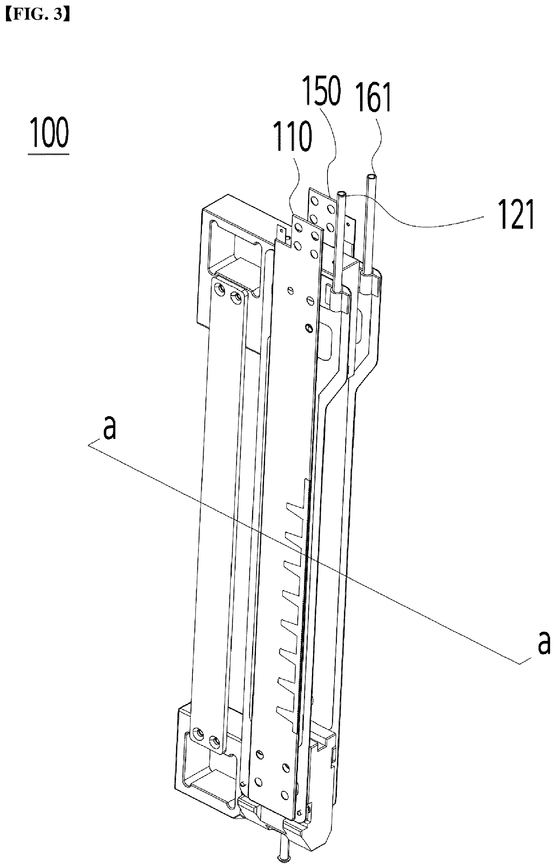

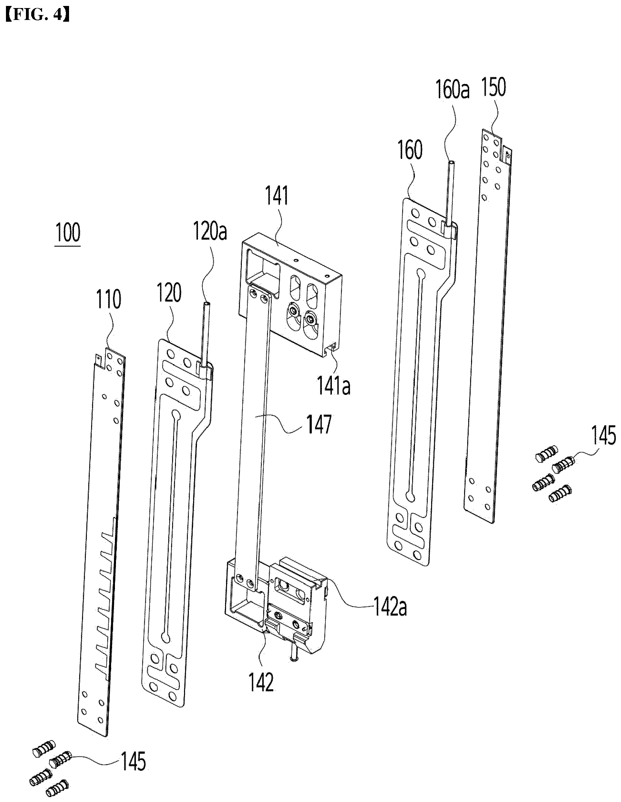

FIG. 3 is a perspective view showing a contact module for a device for charging and discharging a battery according to an embodiment of the present disclosure, and FIG. 4 is an exploded perspective view showing a contact module for a device for charging and discharging a battery according to an embodiment of the present disclosure.

As illustrated in FIGS. 3 and 4, the contact module 100 according to an embodiment of the present disclosure may serve to support the battery cell B and to supply a voltage and current to the battery cell B through coming in contact with both-side electrodes b2 and b3 of the battery cell B.

The contact module 100 includes contact part copper plates 110 and 150, air pockets 120 and 160, and terminals. In an embodiment, each of the terminals may be formed on each of the contact part copper plates 110 and 150. The contact part copper plates 110 and 150, the air pockets 120 and 160, and the terminals constitute symmetrical pairs. The contact part copper plates 110 and 150 and the air pockets 120 and 160, which constitute the pairs, are all able to come in contact with the front and rear surfaces of the both-side electrodes b2 and b3 of the battery cell B disposed between the contact modules 100, and the front and rear surfaces of the both-side electrodes b2 and b3 are able to be simultaneously energized. If the front and rear surfaces of the both-side electrodes b2 and b3 are able to be simultaneously energized, the contact reliability is improved during the voltage and current supply, and thus the test reliability can be heightened more effectively.

Specifically, the contact module 100 is configured to include the first contact part copper plate 110 and the second contact part copper plate 150, the first air pocket 120 and the second air pocket 160, and the first terminal and the second terminal. The first contact part copper plate 110 and the second contact part copper plate 150 are disposed to be spaced apart from each other.

The contact module 100 may further include a support body configured to support the first contact part copper plate 110 and the second contact part copper plate 150 which are spaced apart from each other. The support body includes an upper end support body 141, a lower end support body 142, and a connection frame 147.

Upper ends of the first contact part copper plate 110 and the second contact part copper plate 150 are fixed to the upper end support body 141, and lower ends of the contact part copper plate 110 and the second contact part copper plate 150 are fixed to the lower end support body 142. In an embodiment, each of the upper end support body 141 and the lower end support body 142 has an external appearance formed in the shape of a hexahedron. The connection frame 147 may connect the upper end support body 141 and the lower end support body 142 with each other. For example, the connection frame 147 may be formed in the shape of a plate. The first contact part copper plate 110 and the second contact part copper plate 150 are fixed to the upper end support body 141 and the lower end support body 142 in a manner of being elastically supported. Specifically, an upper end of the first contact part copper plate 110 is fixed to and is elastically supported by an upper end of one side of the upper end support body 141 through the elastic member 145, and a lower end thereof is fixed to and is elastically supported by a lower end of one side of the lower end support body 142 through the elastic member 145. Further, an upper end of the second contact part copper plate 150 is fixed to and is elastically supported by an upper end of the other side of the upper end support body 141 through the elastic member 145, and a lower end thereof is fixed to and is elastically supported by a lower end of the other side of the lower end support body 142 through the elastic member 145.

The elastic member 145 may be a coil spring. As an example, the first contact part copper plate 110 and the second contact part copper plate 150 may be combined with the upper end support body 141 and the lower end support body 142 in a state where the coil spring is combined with an outer periphery of a bolt, and thus may be able to make an elastic movement for a predetermined distance against the upper end support body 141 and the lower end support body 142.

By the above-described configuration, the first contact part copper plate 110 may be elastically supported on one side of the upper end support body 141 and the lower end support body 142, and the second contact part copper plate 150 may be elastically supported on the other side of the upper end support body 141 and the lower end support body 142. More specifically, the first contact part copper plate 110 and the second contact part copper plate 150 may move in an outward direction of the contact module 100 of the device for charging and discharging a battery depending on the expansion of the first air pocket 120 and the second air pocket 160.

The first air pocket 120 is combined with an inner surface of the first contact part copper plate 110, and the second air pocket 160 is combined with an inner surface of the second contact part copper plate 150. The first air pocket 120 and the second air pocket 160 expand or contract by a pneumatic pressure, and during expansion, they move the first contact part copper plate 110 and the second contact part copper plate 150 in the outward direction of the contact module 100, whereas during contraction, they return the first contact part copper plate 110 and the second contact part copper plate 150 to their original positions.

The first air pocket 120 and the second air pocket 160 are respectively provided with air injection parts 121 and 161 for injecting an air. Since the first air pocket 120 and the second air pocket 160 are provided with the air injection parts 121 and 161, the first air pocket 120 and the second air pocket 160 can simultaneously expand.

One side of the first air pocket 120 and the second air pocket 160 is supported by the upper end support body 141, and the other side thereof is supported by the lower end support body 142. Although not illustrated, the first contact part copper plate 110 and the second contact part copper plate 150 may be connected to a power supply part to be supplied with a power therefrom.

The support body is mounted between the first air pocket 120 and the second air pocket 160. The support body comes in contact with and supports the first air pocket 120 and the second air pocket 160 being spaced apart from each other. According to embodiments, the support body of the contact module 100 may be connected to the support member 149. For this, on facing surfaces of the upper end support body 141 and the lower end support body 142, guide slots 141a and 142a, in which the support members 149 are slidably combined and supported, are formed. The guide slots 141a and 142a support edge parts of the support members 149, and stably fix the support members 149 to the upper end support body 141 and the lower end support body 142.

In the description, explanation has been made on the assumption that the contact module 100 includes two air pockets 120 and 160, but the contact module 100 may include only one air pocket according to embodiments. In this case, one air pocket may come in contact with two contact part copper plates 110 and 150, and as the one air pocket expands, two contact part copper plates 110 and 150 may move in opposite directions. Further, the support body may be configured to support two contact part copper plates 110 and 150, and the support body may include an accommodation groove in which one air pocket is accommodated.

According to embodiments of the present disclosure, the pressurization plates 291 and 292 pressurize the contact members in a direction in which the contact members get closer to each other. Accordingly, the cell body b1 of the battery cell B may be pressurized by the pressurization members adjacently disposed, and the distance between the electrodes b2 and b3 of the battery cell B and the adjacent contact module 100 gets closer.

Specifically, with the pressurization of the pressurization plates 291 and 292, the distance between the first contact part copper plate 110 and the second contact part copper plate 150, which face each other, of the adjacent contact modules 100 may get closer. Further, according to embodiments, the contact part copper plates 110 and 150 facing each other may elastically move by the pressurization thereof, and thus the distance may get further closer. Accordingly, the distance between the electrodes b2 and b3 of the battery cell B and the contact part copper plates 110 and 150 of the adjacent contact modules 100 may also get further closer.

Thereafter, in a state where the distance between the electrodes b2 and b3 of the battery cell B and the contact part copper plates 110 and 150 gets closer, the first air pocket 120 and the second air pocket 160 may simultaneously expand, and the contact part copper plates 110 and 150 may come in contact with the electrodes b2 and b3 of the battery cell B.

That is, even without strong pressurization by the pressurization plates 291 and 292, the contact part copper plates 110 and 150 can come in contact with the electrodes b2 and b3 of the battery cell B through the air pockets 120 and 160, and thus the electrodes b2 and b3 of the battery cell B can be prevented from being damaged.

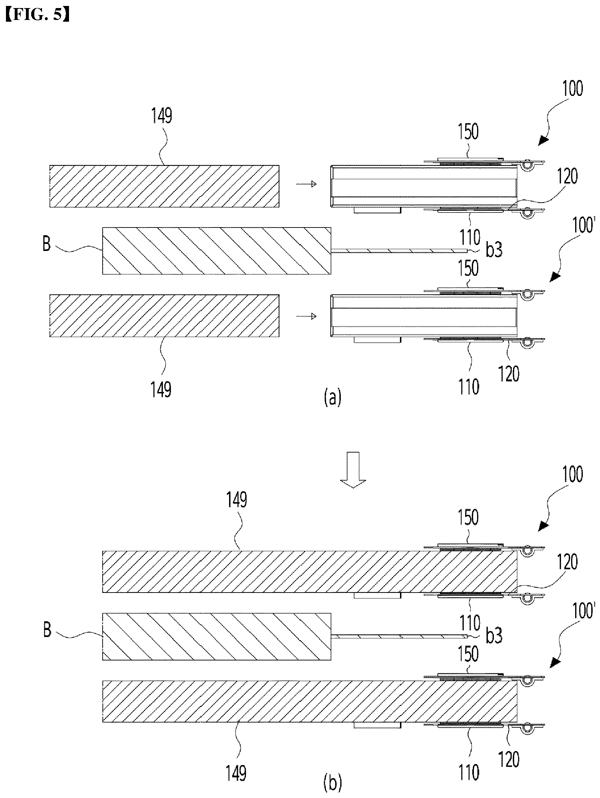

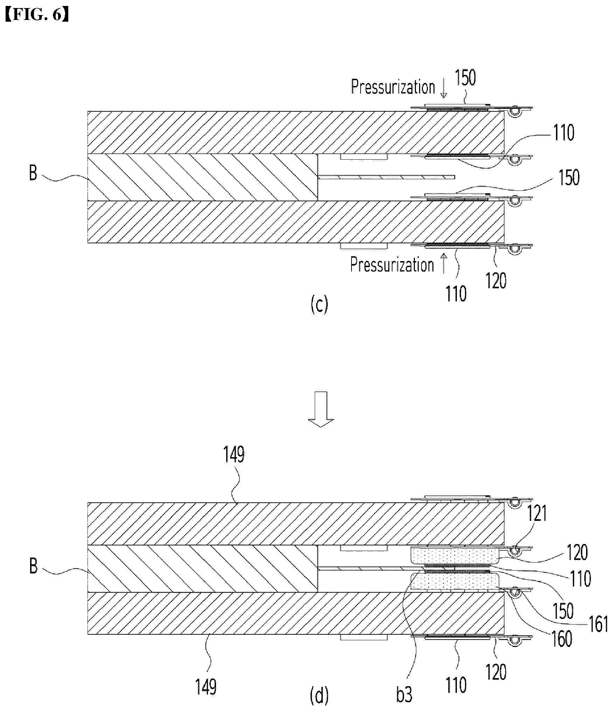

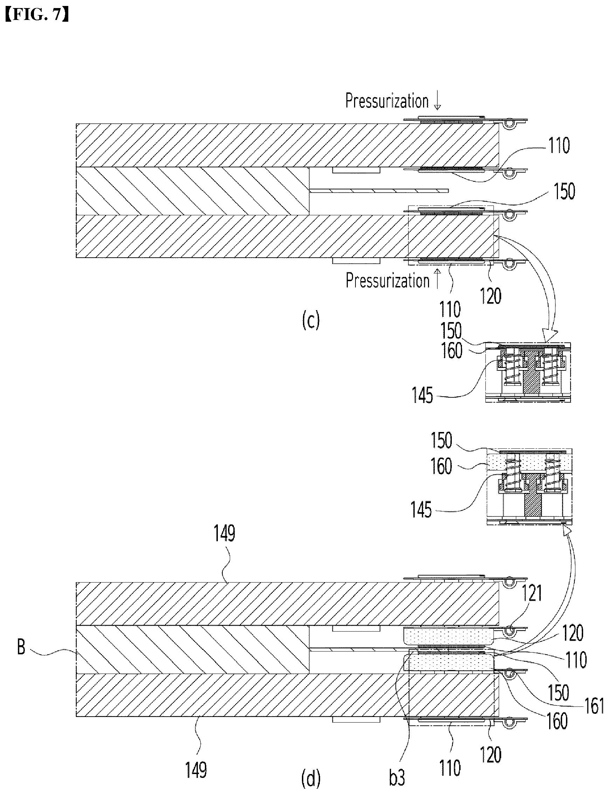

FIG. 5 is a cross-sectional view taken along line a-a of FIG. 3 and is a view showing a shape in which electrodes of a battery cell are positioned on contact modules of a device for charging and discharging a battery according to an embodiment of the present disclosure. FIG. 6 is a view showing a shape in which a first air pocket and a second air pocket expand after a contact module for a device for charging and discharging a battery according to an embodiment of the present disclosure is pressed by a pressurization plate. FIG. 7 is a view explaining the principle in which a first contact part copper plate and a second contact part copper plate move in a direction in which they get closer to each other when a contact module for a device for charging and discharging a battery according to an embodiment of the present disclosure is pressed by a pressurization plate.

Referring to FIGS. 5 to 7, a method for operating a contact module of a device for charging and discharging a battery according to an embodiment of the present disclosure includes: (a) positioning an electrode b3 of a battery cell B in a space between contact modules 100 and contact modules 100' disposed adjacent to each other; (b) moving the contact modules 100 disposed side by side in a direction in which the contact modules 100 get closer to each other by pressurizing contact members including the contact modules 100 and 100' through a first pressurization plate 291 and a second pressurization plate 292; (c) expanding a first air pocket 120 and a second air pocket 160 combined with inner surfaces of a first contact part copper plate 110 and a second contact part copper plate 150 by supplying an air thereto; and (d) proceeding with a charging/discharging process by making the electrode b3 of the battery cell B, which is positioned between the first contact part copper plate 110 and the second contact part copper plate 150, come in contact with the first contact part copper plate 110 and the second contact part copper plate 150 by moving the first contact part copper plate 110 and the second contact part copper plate 150 in an outward direction of the contact modules 100 and 100' through expansion of the first air pocket 120 and the second air pocket 160.

Referring to FIG. 5, in step (a), the electrode b3 of the battery cell B may be positioned in the space between the contact modules 100 and the contact modules 100' disposed adjacent to each other. Meanwhile, before the electrode b3 of the battery cell B is positioned, the contact members may be formed by combining the support member 149 with the contact modules 100. For example, the guide slots 141a and 142a formed on facing surfaces of an upper end support body 141 and a lower end support body 142 may be combined with the support member 149.

In steps (b) and (c), the first pressurization plate 291 and the second pressurization plate 292 pressurize the contact modules 100 and 100' of the device for charging and discharging a battery in a direction in which the contact modules 100 and 100' get closer, and thus the first contact part copper plate 110 and the second contact part copper plate 150 move in a direction in which they get closer. In this case, as illustrated in FIG. 7, since the first contact part copper plate 110 and the second contact part copper plate 150 may be combined with the upper end support body 141 and the lower end support body 142 in a state where a coil spring s is combined with an outer periphery of a bolt m, and thus may be able to make an elastic movement for a predetermined distance in an outward direction of the upper end support body 141 and the lower end support body 142.

As illustrated in FIG. 6, in steps (c) and (d), the first air pocket 120 and the second air pocket 160 expand through injection of the air into an air injection part 121 of the first air pocket 120 and an air injection part 161 of the second air pocket 160. That is, in the step of expanding the first air pocket 120 and the second air pocket 160, the contact part copper plates 110 and 150 come in contact with the electrode b3 of the battery cell B with the expansion of the first air pocket 120 and the second air pocket 160. For example, the air pockets 120 and 160 may simultaneously expand to make the contact part copper plates 110 and 150 simultaneously come in contact with the electrode b3 of the battery cell B, but embodiments of the present disclosure are not limited thereto.

In case that the first air pocket 120 and the second air pocket 160 expand, the first air pocket 120 and the second air pocket 160 may move the first contact part copper plate 110 and the second contact part copper plate 150 in an outward direction of the contact modules 100, and the first contact part copper plate 110 and the second contact part copper plate 150 may come in contact with the electrode of the battery cell B.

In step (d), as the first contact part copper plate 110 and the second contact part copper plate 150 come in contact with the electrode b3 of the battery cell B, the charging/discharging process is performed.

The step (d) of proceeding with the charging/discharging process may be performed in a state where a power being supplied to the first contact part copper plate 110 is supplied to the contacted electrode of the battery cell B.

The method may further include contracting the first air pocket 120 and the second air pocket 160 by exhausting the air in the first air pocket 120 and the second air pocket 160. By contracting the first air pocket 120 and the second air pocket 160, the first contact part copper plate 110 and the second contact part copper plate 150 return to their original positions by their elastic forces, and thus the battery cell B may be separable from the first contact part copper plate 110 and the second contact part copper plate 150.

As described above, the contact module 100 of the device for charging and discharging a battery may be provided with the air pockets 120 and 160 inside the contact part copper plates 110 and 150 that come in contact with the electrodes b2 and b3 of the battery cell B, and the distance between the contact part copper plates 110 and 150 and the electrodes b2 and b3 gets closer by the pressurization operation of the pressurization plates 291 and 292. Thereafter, the first air pocket 120 and the second air pocket 160 combined with the insides of the contact part copper plates 110 and 150 expand, and the first contact part copper plate 110 and the second contact part copper plate 150 come in contact with the electrodes b2 and b3 of the battery cell B.

Accordingly, the contact module 100 of the device for charging and discharging a battery as described above can pressurize a plurality of pouch-type batteries with the same pressure during a test for charging and discharging the batteries. Further, it is possible to heighten contact reliability of the contact module for the batteries even in case that the batteries have thickness deviations.

Further, the contact module 100 of the device for charging and discharging a battery can heighten the contact reliability by adjusting the expansion degree of the first air pocket 120 and the second air pocket 160 even in case that the thicknesses of the electrodes b2 and b3 of the battery cell B are changed.

Further, since the contact module 100 and the electrodes b2 and b3 of the battery cell B do not directly come in contact with each other by the pressurizing force of the pressurization plates of the device 10 for charging and discharging a battery, there is no risk of breakage or damage of the contact part copper plates of the contact modules on which the battery cell B is not disposed even in case that the battery cell is not disposed between some of the plurality of contact modules 100. That is, even without positioning of unnecessary dummy cells in a part where the battery cell B is not disposed, the battery charging/discharging test for some battery cells B can be performed more simply.

Further, the contact module 100 can easily perform the contact part position adjustment during the battery charging/discharging by using the adjustment bars 210 and 220.

The above explanation of the present disclosure is merely for exemplary explanation of the technical idea of the present disclosure, and it can be understood by those of ordinary skill in the art to which the present disclosure pertains that various corrections and modifications thereof will be possible in a range that does not deviate from the essential characteristics of the present disclosure. Accordingly, it should be understood that the embodiments disclosed in the present disclosure are not to limit the technical idea of the present disclosure, but to explain the same, and thus the scope of the technical idea of the present disclosure is not limited by such embodiments. The scope of the present disclosure should be interpreted by the appended claims to be described later, and all technical ideas in the equivalent range should be interpreted as being included in the scope of the present disclosure.

## Claims

1. A contact module of a device for charging and discharging a battery comprising:
a first contact part copper plate and a second contact part copper plate disposed to be spaced apart from each other;
a first air pocket and a second air pocket combined with inner side surfaces of the first contact part copper plate and the second contact part copper plate, respectively, and configured to expand or contract by a pneumatic pressure; and
a support body disposed between the first air pocket and the second air pocket, and configured to support the first air pocket and the second air pocket being spaced apart from each other.

2. The contact module of claim 1, wherein the first contact part copper plate and the second contact part copper plate are configured to move depending on expansion of the first air pocket and the second air pocket.

3. The contact module of claim 1, wherein each of the first air pocket and the second air pocket is provided with an air injection part configured to inject an air.

4. The contact module of claim 1, wherein the support body comprises an upper end support body and a lower end support body configured to support the first contact part copper plate and the second contact part copper plate being spaced apart from each other.

5. The contact module of claim 4, wherein an upper end and a lower end of the first contact part copper plate are fixed to and are elastically supported by a one-side upper end of the upper end support body and a one-side lower end of the lower end support body through an elastic member, and
wherein an upper end and a lower end of the second contact part copper plate are fixed to and are elastically supported by the other-side upper end of the upper end support body and the other-side lower end of the lower end support body through an elastic member.

6. The contact module of claim 4, wherein a guide slot is formed on a surface on which the upper end support body and the lower end support body face each other.
